**Europäisches Patentamt**

**European Patent Office**

**Office européen des brevets**

(19)

(11) Veröffentlichungsnummer: **0 085 768**
**B1**

(12) # EUROPÄISCHE PATENTSCHRIFT

(45) Veröffentlichungstag der Patentschrift:
**19.06.85**

(21) Anmeldenummer: **82111176.2**

(22) Anmeldetag: **02.12.82**

(51) Int. Cl.⁴: **B 65 G 57/18, B 65 G 57/081**

(54) Arbeitsverfahren zum Bilden von unverschachtelten bzw. verschachtelten Profilstabpaketen und Einrichtungen zur Durchführung des Verfahrens.

(30) Priorität: **24.12.81 DE 3151482**

(43) Veröffentlichungstag der Anmeldung:
**17.08.83 Patentblatt 83/33**

(45) Bekanntmachung des Hinweises auf die Patenterteilung:
**19.06.85 Patentblatt 85/25**

(84) Benannte Vertragsstaaten:
**AT DE FR GB IT**

(56) Entgegenhaltungen:
**DE - A - 2 619 973**
**DE - B - 2 940 416**
**DE - C - 2 106 091**
**DE - C - 2 230 715**

(73) Patentinhaber: **SMS SCHLOEMANN-SIEMAG AKTIENGESELLSCHAFT, Steinstrasse 13, D-4000 Düsseldorf 1 (DE)**

(72) Erfinder: **Berz, Gerhard, Cornellusstrasse 71, D-4000 Düsseldorf (DE)**
Erfinder: **Braun, Hans Jürgen, Anratherweg 12, D-4000 Düsseldorf (DE)**
Erfinder: **Schlanzke, Claus Georg, Heinrich-Hertz-Strasse 22, D-4030 Ratingen-Eckamp (DE)**

(74) Vertreter: **Pollmeier, Felix et al, Patentanwälte Hemmerich-Müller-Grosse-Pollmeier Eduard-Schloemann-Strasse 47, D-4000 Düsseldorf 1 (DE)**

**Beschreibung**

Gegenstand der Erfindung ist ein Arbeitsverfahren zum Bilden von unverschachtelten bzw. verschachtelten Profilstabpaketen auf einem höhenverstellbaren Stapeltisch von Profilstapelmaschinenen, wobei die jeweils eine Stabschicht bildenden Profilstäbe schichtweise nacheinander auf den Stapeltisch übergefördert und aufeinander abgelegt werden sowie Einrichtungen zur Durchführung des Verfahrens.

Durch die DE-PS 2 106 091 ist es beim Stapeln von Gruppen von Profilstäben bekannt, diese verschachtelt auf einem heb- und senkbaren Stapeltisch nacheinander abzulegen, indem wechselweise Überhebewagen und Wendemagneten je eine Gruppe von Profilstäben in ungewendetem bzw. gewendetem Zustand auf den Stapeltisch überheben. Dabei erfolgt das Ablegen der Stabgruppe mittels Überhebewagen durch ein schnelles Zurückziehen der Auflageleisten, nachdem die Auflageleisten in den Bereich von Anschlägen im Bereich des Stapeltisches abgesenkt worden sind und die Gruppe von Profilstäben dabei von den Auflageleisten abgestreift wird und auf den Stapeltisch gleitet.

Weiter ist nach der DE-PS 2 230 715 eine Einrichtung bekannt, bei welcher die einzelnen Profilstäbe auf in Querförderrichtung verfahrbaren, mit Prrofilkämmen versehenen Wagen zu Stabgruppen gesammelt, in den Bereich von Wendemagneten wahlweise unverschachtelt oder verschachtelt schichtweise auf dem Stapeltisch abgelegt werden.

Beide vorbeschriebene Einrichtungen sind lediglich dafür geeignet, jeweils ein Stabpaket auf dem Stapeltisch zu bilden. Das ist jedoch von Nachteil, sofern kleinere Stabpakete bzw. kleinere Paketgewichte von dem Kunden verlangt werden. Denn bei dem Bilden von Paketen mit Gruppen von Profilstäben ist die Leistung der Stapelmaschine von der Breite der Stabgruppen, d. h. von der Anzahl der Stäbe pro Stabgruppe abhängig. Je breiter die Stabgruppe, umso größer ist die Leistung, da bei einer breiten Stabgruppe mehr Stäbe und damit ein größeres Gesamtgewicht pro Zeiteinheit gestapelt wird. Für die Stabilität der gestapelten Pakete ist die Paketform ausschlaggebend.

Allzu flache Pakete von Stabgruppen lassen sich schlecht transportieren und binden, da die Stabgruppen sich dabei zusammenschieben. Wegen der Festigkeit beim Binden strebt man möglichst Pakete mit Quadratform an. Unter diesen Voraussetzungen ist ein hoher Durchsatz an der Stapelmaschine nur bei großen Paketgewichten möglich, denn eine breite Stabgruppe erfordert für die Stabilität des Paketes auch eine entsprechende Pakethöhe. Daraus resultiert wiederum ein großes Paketgewicht.

Bei kleineren Paketgewichten ist es notwendig, schmale Stabgruppen zu Paketen zu stapeln, d. h., es werden weniger Profilstäbe pro Zeiteinheit abgelegt und die Leistung der Stapelmaschine geht zurück.

Aufgabe der Erfindung ist es, diesem Leistungsabfall der Stapelmaschine zu begegnen, indem die annähernd volle Leistung der Stapelmaschine auch beim Binden von kleineren Stabpaketen ausgenutzt wird.

Diese Aufgabe wird erfindungsgemäß durch ein Arbeitsverfahren gelöst, daß auf dem Stapeltisch gleichzeitig zwei oder mehr kleine Stabpakete gebildet werden, indem während eines jeden Überförderns gleichzeitig eine in zwei oder mehr Stabgruppen unterteilte Profilstabschicht mit Lücken zwischen den Stabgruppen auf dem Stapeltisch abgelegt und die Stabgruppen der aufeinanderfolgenden Profilstabschichten zu zwei oder mehr Kleinpaketen gestapelt werden.

In weiterer Ausbildung des Arbeitsverfahrens werden die Profilstäbe in zwei oder mehr Stabgruppen unterteilten Profilstabschichten in der gleichen Lage schichtweise aufeinander abgelegt bzw. die Profilstäbe der in zwei oder mehr Stabgruppen unterteilten Profilstabschicht werden abwechselnd schichtweise in ungewendeter und gewendeter Lage aufeinander abgelegt.

Bei einer Einrichtung zur Durchführung des Verfahrens, bei der aus angeförderten Profilstabgruppen längs eines Endlosförderers an verstellbaren heb- und senkbaren Stopperpaaren kleinere Profilstabschichten vorgewählter Stabzahl und Gesamtbreite gebildet und zu einer Stoppergruppe im Bereich der Abnahmestelle weitergefördert und mittels Hubeinrichtungen und Wendemagneten von der Abnahmestelle in den Bereich des Stapeltisches übergefördert werden, sind mindestens an zwei getrennten Stoppergruppen anliegende kleinere Gruppen von Profilstäben gleichzeitig unterhalb einer ersten Gruppe von Wendemagneten positioniert und mittels heb- und senkbarer sowie seitlich verfahrbarer Überhebewagen an deren Unterseite zur Anlage gebracht. Die erste Gruppe von Wendemagneten wird um eine quer zur Zuförderrichtung drehbewegliche Achse zwischen eine weitere Gruppe von Wendemagneten eingeschwenkt, die Teil von drehbeweglichen Doppelmagneten sind, deren obere Wendemagneten sich jeweils in der Aufnahmeposition und deren andere untere Wendemagneten sich jeweils über dem Stapeltisch in der Ablegeposition befinden und nach Drehen der Doppelmagneten um jeweils 180° in zwei getrennte Pakete bildende Gruppen die Profilstäbe schichtweise nacheinander abgelegt werden.

Zum Ablegen von verschachtelten Profilstabpaketen ist die Hubeinrichtung wechselweise zum Abheben und Ablegen einer Profilstabschicht in den Bereich des Wendemagneten oder eines der weiteren Wendemagneten des Doppelmagneten bewegbar.

Zum Ablegen von unverschachtelten Profilstabpaketen wird die Hubeinrichtung aus einem im Bereich des ersten und des weiteren Wendemagneten heb- und senkbaren und in horizontaler Ebene verfahrbaren Paares von Übergabewagen gebildet.

Bei einer weiteren Einrichtung zur Durchführung des Verfahrens, wobei wechselweise in der einen oder der anderen Richtung bewegbare, mit Ablegekämmen versehene Gruppen von Transportwagen über die Breite der Ablegekämme nacheinander mit Profilstäben gleicher Lage beschickt werden und die jeweils mit einer Profilstabgruppe versehene Transportwagengruppe in den Bereich einer vor dem Stapeltisch angeordneten Gruppe von Wendemagneten verfahrbar ist, die Gruppe von Wendemagneten die jeweilige Profilstabgruppe von den Ablegekämmen der in den Bereich der Wendemagneten verfahrbaren Transportwagengruppe abhebt und unter Verschwenken der Wendemagneten um 180° schichtweise nacheinander auf den Stapeltisch ablegt, sind die Ablegekämme in zwei oder mehr durch Lücken getrennte Abschnitte von Ablegekämmen unterteilt und die in den getrennten Abschnitten gebildeten Profilstabgruppen werden auf dem Stapeltisch zu zwei oder mehr getrennten Profilstabpaketen schichtweise abgelegt.

In weiterer Ausbildung der Erfindung sind die Ablegekämme der beiden Gruppen von Transportwagen abwechselnd zur Aufnahme von ungewendeten und gewendeten Profilstabgruppen in ihren getrennten Abschnitten je Profilschicht ausgebildet. Die Ablegekämme sind mit den Transportwagen lösbar verbunden.

Ausführungsbeispiele der Erfindung stellen die Zeichnungen dar. Es zeigt

Fig. 1 eine Stapelmaschine im Prinzip, zum gleichzeitigen Bilden von zwei Kleinpaketen auf einem Stapeltisch und

Fig. 2 eine weitere Stapelmaschine im Prinzip, zum gleichzeitigen Bilden von zwei Kleinpaketen auf einem Stapeltisch.

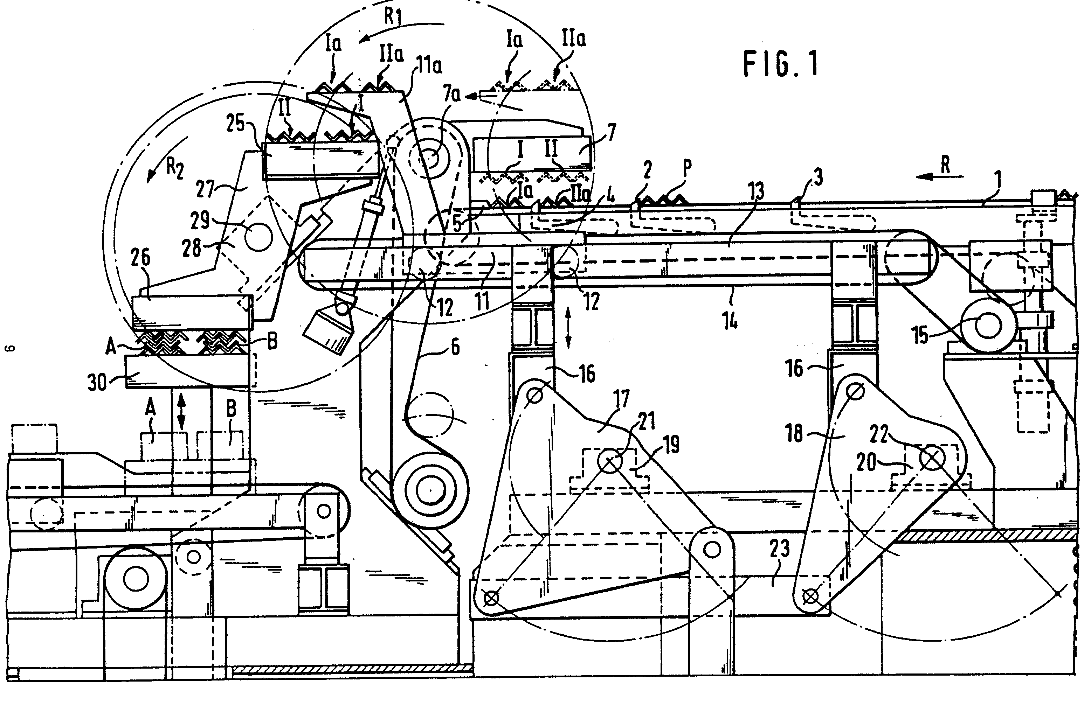

In der Fig. 1 ist mit 1 ein von einem nicht weiter dargestellten Motor angetriebener endloser Kettenförderer bezeichnet, welcher der eigentlichen Stapelmaschine Gruppen von Profilstäben P, beispielsweise Winkelprofile vorbestimmter Anzahl, in Richtung des Pfeiles R zuführt. Längs des Kettenförderers 1 sind Gruppen von heb- und senkbaren Stoppern 2 und 3 angeordnet, welche die folgenden Gruppen von Profilstäben P so lange an dem Weitertransport auf dem Kettenförderer 1 hindern, bis die im Bereich unter einer Gruppe von um eine Drehachse 7a mittels eines Kettenantriebes 6 auf einer Kreisbahn in Richtung des Pfeiles $R_1$ schwenkbeweglichen Wendemagneten 7 längs des Kettenförderers 1 an weiteren Gruppen von heb- und senkbaren Stoppern 4 und 5 anliegende Gruppen von Profilstäben P von dem Kettenförderer 1 abgehoben worden sind.

Das Anheben der von beispielsweise je aus drei Profilstäben P gebildeten Profilstabgruppen I und II erfolgt mittels der Transportleisten 11a von Übergabewagen 11. Die Übergabewagen 11 sind mittels Rollen 12 einerseits auf einem Hubtisch 13 längs einer endlosen Kette 14, die von einem Motor 15 angetrieben ist, verfahrbar. Andererseits stützt sich der Hubtisch 13 über Stützen 16 nach unten ab, mit denen Winkelhebel 17, 18 gelenkig verbunden sind. Die Winkelhebel 17, 18 sind um in einer gemeinsamen horizontalen Ebene angeordneten Stützlager 19, 20 auf drei beweglich angetriebenen Wellen 21, 22 gelagert. Zwecks Gleichlauf sind die Winkelhebel 17, 18 über ein Gestänge 23 in horizontaler Ebene gelenkig miteinander verbunden.

Im Bereich oberhalb der Stopper 4 und 5 sind Wendemagneten 7 angeordnet, welche unter Versatz in den Bereich von weiteren Wendemagneten 25 schwenkbar sind. Die Wendemagneten 25 und die Wendemagneten 26 sind paarweise einander diametral gegenüberstehend mit gemeinsamen Schwenkarmen 27 verbunden, welche auf einer in Stützlagern 28 gelagerten Welle 29 in Richtung des Pfeiles $R_2$ auf einer Kreisbahn drehbeweglich sind.

Die Wendemagneten 25 befinden sich in ihrer oberen Aufnahmestellung, während sich die Wendemagneten 26 in der Fig. 1 in ihrer unteren Abgabestellung über einem heb- und senkbaren Stapeltisch 30 befinden. Da mittels der Überfördermittel jeweils gleichzeitig und aufeinanderfolgend zwei Gruppen von Profilen I, II bzw. Ia, IIa in voneinander getrennten Paketen A und B auf dem Stapeltisch 30 abgelegt werden, ist es möglich, die vorhandene Stapeltischbreite auch beim Stapeln von Kleinpaketen voll auszunutzen, wodurch auch die annähernd volle Durchsatzleistung der Stapelmaschine genutzt wird.

Die Funktionsweise der Anlage, ist auf das dargestellte Ausführungsbeispiel der Fig. 1 bezogen, folgende:

Zunächst gelangen auf dem Kettenförderer 1 nacheinander zwei Gruppen I und II mit je drei Profilstäben in Richtung des Pfeiles R vor den Stoppern 4 und 5 unterhalb der Wendemagneten 7 zur Anlage und werden gemeinsam durch Unterfassen mittels der Transportleisten 11a der heb- und senkbaren Übergabewagen 11 und Abheben von der Förderebene des Kettenförderers 1 an der Unterseite der magnetisierten Wendemagneten 7 zur Anlage gebracht. Danach werden die Übergabewagen 11 wieder abgesenkt. Die Wendemagneten 7 werden um ihre Drehachse 7a zunächst um 180° gedreht und legen sich kammartig versetzt zwischen die in der oberen Aufnahmestellung befindlichen, inzwischen magnetisierten weiteren Wendemagneten 25. Die Wendemagneten 7 werden entmagnetisiert und werden dann um die Drehachse 7a weiter um ca. 90° auf der Kreisbahn in Richtung des Pfeiles $R_1$ bewegt, so daß sich die Gruppen I, II von Profilstäben auf die Oberseite der Wendemagneten 25 auflegen. Dann werden die Schwenkarme 27 um die Drehachse 29 in Richtung des Pfeiles $R_2$ nach Absenken des Stapeltisches 30 um 180° gedreht, so daß die auf dem weiteren Wendemagneten 25 abgelegten beiden Profilstabgruppen I und II nach Anheben des Stapeltisches 30 und Entmagnetisieren der Wendemagneten 25 in zwei getrennten Paketen A und B auf diesem abgelegt werden.

Inzwischen sind an den Stoppern 4 und 5 je eine Gruppe Ia, IIa mit je zwei Profilstäben P durch den Quertransport auf dem Kettenförderer 1 zur Anlage gekommen. Durch Anheben der Übergabewagen 11 in ihre obere Position werden die beiden Profilstabgruppen Ia, IIa von den Tragleisten 11a unterfaßt und von dem Kettenförderer 1 in die obere gestrichelt dargestellte Lage durch Anheben des Hubtisches 13 der Übergabewagen 11 mittels des Hubantriebes angehoben. Die Übergabewagen 11 werden auf den Rollen 12 bzw. des Hubtisches 13 in den Bereich der nunmehr in ihrer oberen Lage befindlichen weiteren Wendemagneten 26 verfahren. Dann werden die Tragleisten 11a beim Absenken des Hubtisches 13 unter die Auflageebene der weiteren Wendemagneten 26 abgesenkt. Dabei werden die beiden Profilstabgruppen Ia, IIa auf den magnetisierten Wendemagneten 26 abgelegt. Die Übergabewagen 11 mit ihren Tragleisten 11a werden in ihre Ausgangsposition unterhalb der Stopper 4, 5 zurückbewegt und die Wendemagneten 7 werden weiter auf der Kreisbahn in Richtung des Pfeiles $R_1$ in ihre Ausgangsposition zurückgeschwenkt. Die weiteren Wendemagneten 26 werden mit den weiteren Wendemagneten 25 gemeinsam nach Absenken des Stapeltisches 30 wiederum um 180° gedreht.

Damit befinden sich die weiteren Wendemagneten 26 mit den beiden Profilstabgruppen Ia, IIa über dem Stapeltisch 30. Der Stapeltisch 30 wird angehoben und durch Entmagnetisieren der weiteren Wendemagneten 26 werden die beiden Profilstabgruppen Ia, IIa zu zwei getrennten Paketen A und B abgelegt. Das Arbeitsspiel der Stapelmaschine wird, wie vorbeschrieben, fortgesetzt bis sich zwei verschachtelte Kleinpakete A und B gleichzeitig nebeneinander auf dem Stapeltisch 30 gebildet haben.

Sodann wird der Stapeltisch 30 abgesenkt, und die Kleinpakete A und B werden auf einen verfahrbaren Wagen zum Abtransport abgesenkt.

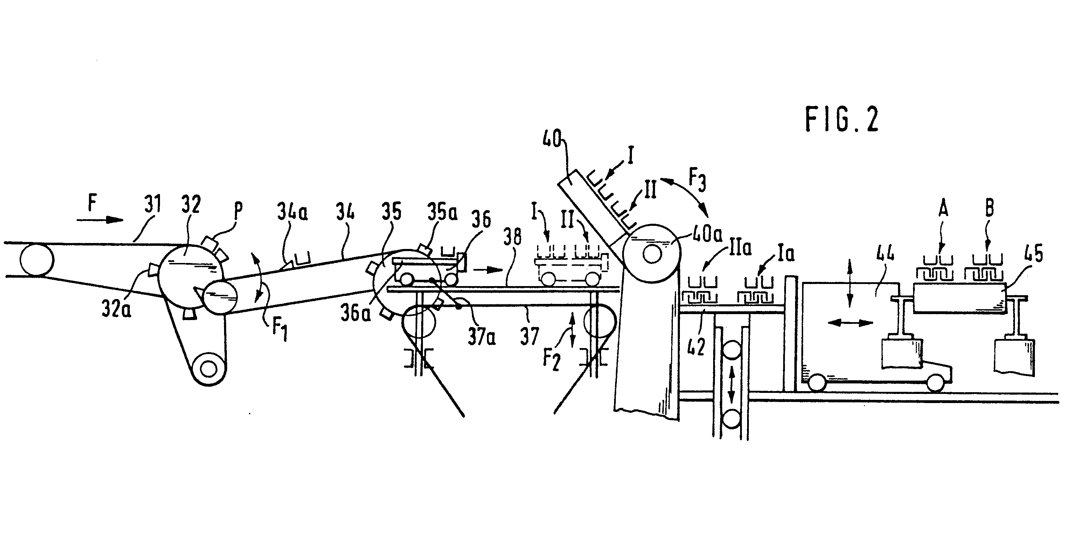

In der Fig. 2 ist ein weiteres Ausführungsbeispiel einer Stapelmaschine im Prinzip dargestellt, die ebenfalls geeignet ist, mehrere Kleinpakete gleichzeitig nebeneinanderliegend auf dem Stapeltisch zu stapeln.

Mit 31 ist ein endloser, die Profilstäbe P, beispielsweise U-Profile quer zu ihrer Längsachse in Richtung des Pfeiles F bewegbarer Kettenförderer bezeichnet, der an seinem der Stapelmaschine zugewandten Ende einer Gruppe von mit Nokken oder Taschen 32a an ihrem Umfang versehenen Wenderädern 32 aufweist. Ein sich anschließender weiterer, in Richtung des Pfeiles $F_1$ heb- und senkbarer endloser Kettenförderer 34 ist mit Anschlägen 34a an seinem Umfang besetzt, der die von den Nocken 32a der Wenderäder 32 zugeförderten Profilstäbe P in angehobener Lage des Kettenförderers 34 ungewendet und in nach unten abgesenkter Lage des Kettenförderers 34 gewendet einer weiteren Gruppe von mit Nocken 35a an ihrem Umfang besetzten Förderrädern 35 zuführt. Die nacheinander angeförderten Profilstäbe P werden mittels der Nocken 35a auf den Ablagekämmen 36a einer Gruppe von Transportwagen 36 nacheinander zu zwei getrennten Stabgruppen I und II abgelegt, indem die Transportwagen 36 nacheinander mit einer einer Stabgruppe I entsprechenden Anzahl von Profilstäben P belegt werden, wobei die Transportwagen 36, mit dem endlosen Seilzug 37 über ein Kuppelgestänge 37a gekuppelt um jeweils die Breite eines Profilstabes P in Richtung der Stapelmaschine verfahren werden. Sobald die Auflageebene der Transportwagen 36 mit der ersten Profilstabgruppe I belegt worden ist, erfolgt ein gegenüber der Profilstabbreite etwas größer, eine Lücke bildender Verfahrweg und nachfolgend wird auf der Ablageebene der Transportwagen 36 eine weitere Profilstabgruppe II, wie vorbeschrieben, abgelegt.

Sobald auf der Gruppe von Transportwagen 36 die beiden Profilstabgruppen I und II gebildet worden sind, wird die Gruppe von Transportwagen 36 mittels des Hubtisches 38 in Richtung des Pfeiles $F_2$ angehoben und über den Seilzug 37 längs der Verfahrbahn auf dem Hubtisch 38 in den Bereich einer Gruppe von Wendemagneten 40 bewegt, so daß die beiden Profilstabgruppen I und II sich oberhalb der Oberkante der Wendemagneten 40 befinden. Sodann wird der Hubtisch 38 in Richtung des Pfeiles $F_2$ abgesenkt, wobei sich die beiden Profilstabgruppen I und II auf die Oberfläche der magnetisierten Wendemagneten 40 auflegen. Die Gruppe von Transportwagen 36 wird anschließend in den Bereich der Förderräder 35 zurückbewegt, um erneut mit Profilstäben P nacheinander belegt zu werden, die wiederum zwei getrennte Profilstabgruppen I, II mit gewendeten oder zwei getrennte Profilstabgruppen Ia, IIa mit ungewendeten Profilstäben P bilden, je nachdem, ob der heb- und senkbare Kettenförderer 34 sich in seiner unteren oder oberen Position im Bereich der Wenderäder 32 befindet.

Die Gruppe von Wendemagneten 40 ist inzwischen um ihre Drehachse 40a um ca. 180° in den Bereich eines heb- und senkbaren Stapeltisches 42 verschwenkt worden, auf welchem die beiden Profilgruppen I, II gleichzeitig unter Entmagnetisieren der Wendemagneten 40 zu getrennten Kleinpaketen A und B schichtweise, wie dargestellt, verschachtelt abgelegt werden. Der Vorgang wiederholt sich so lange, bis die Kleinpakete A und B ihre etwa quadratische Abmessung erreicht haben. Sodann wird der Stapeltisch 42 so weit angehoben, daß dessen Auflagefläche von einem heb- und senkbaren, sowie seitlich verfahrbaren Transportwagen 44 unterfahren werden kann, der die beiden Kleinpakete A und B von dem Stapeltisch 42 abhebt und in den Bereich eines Abförderrollgangs 45 bewegt und auf diesem zum Abtransport absetzt.

Da die Stapelanlagen bekanntlich auch derart über ihre Länge konzipiert sind, daß diese zum Stapeln von unterschiedlich langen Profilstäben aus mehreren voneinander lösbaren, getrennt betreibbaren oder zusammenschaltbaren Einheiten bestehen, können über die Länge der Stapelanlage auch je Einheit mehrere nebeneinander liegende Kleinpakete von kürzeren Profilstablängen gebildet werden.

Die Stapelanlagen sind dazu geeignet, Profilstäbe verschiedenster Profilform, wie Flach-, U-, gleichschenklige oder ungleichschenklige Winkelprofile, kleine T- oder I-Profile oder dergleichen teils nur ineinander verschachtelt, teils verschachtelt oder unverschachtelt zu stapeln. Es können bedarfsweise sinngemäß zwei oder mehrere Kleinpakete gleichzeitig gestapelt werden.

In bekannter Weise sind die Wendemagneten 7, 25, 26 und 40 sowie die Transportwagen 36 mit profilierten oder glatten Ablagekämmen versehen, in welche sich die jeweiligen Profilstäbe hinsichtlich ihres Querschnittes, ihrer Lage sowie ihrer Profilform einlegen. Die Ablagekämme sind lösbar mit den Wendemagneten 7, 25, 26 und 40 sowie mit den Transportwagen 36 verbunden.

**Patentansprüche**

1. Arbeitsverfahren zum Bilden von unverschachtelten bzw. verschachtelten Profilstabpaketen auf einem höhenverstellbaren Stapeltisch (30) von Profilstapelmaschinen, wobei die jeweils eine Stabschicht bildenden Profilstäbe (P) schichtweise nacheinander auf den Stapeltisch übergefördert und aufeinander abgelegt werden, dadurch gekennzeichnet, daß während eines jeden Überförderns gleichzeitig eine in zwei oder mehr Stabgruppen (I, II; Ia, IIa) unterteilte Profilstabschicht mit Lücken zwischen den Stabgruppen auf dem Stapeltisch abgelegt und die Stabgruppen der aufeinanderfolgenden Profilstabschichten zu zwei oder mehr Kleinpaketen (A, B) gestapelt werden.

2. Arbeitsverfahren nach Anspruch 1 zum Bilden von unverschachtelten Profilstabpaketen, dadurch gekennzeichnet, daß die Profilstäbe (P) der in zwei oder mehr Stabgruppen (I, II; Ia, IIa) unterteilten Profilstabschicht in der gleichen Lage schichtweise aufeinander abgelegt werden.

3. Arbeitsverfahren nach Anspruch 1 zum Bilden verschachtelter Profilstabpakete, dadurch gekennzeichnet, daß die Profilstäbe (P) der in zwei oder mehr Stabgruppen (I, II; Ia, IIa) unterteilten Profilstabschicht abwechselnd schichtweise in ungewendeter und gewendeter Lage aufeinander abgelegt werden.

4. Einrichtung zur Durchführung des Verfahrens nach einem der Ansprüche 1 oder 2, wobei aus angeförderten Profilstabgruppen (I, II; Ia, IIa) längs eines Endlosförderers an verstellbaren heb- und senkbaren Stopperpaaren (4, 5) kleinere Profilstabschichten vorgewählter Stabzahl und Gesamtbreite gebildet und zu einer Stoppergruppe im Bereich der Abnahmestelle weitergefördert und mittels Hubeinrichtungen und Wendemagneten (7) von der Abnahmestelle in den Bereich des Stapeltisches (30) übergefördert werden, dadurch gekennzeichnet, daß mindestens zwei an getrennten Stoppergruppen (4, 5) anliegende kleinere Gruppen von Profilstäben (P) gleichzeitig unterhalb einer ersten Gruppe von Wendemagneten (7) positioniert und mittels heb- und senkbarer sowie seitlich verfahrbarer Übergabewagen (11) an deren Unterseite zur Anlage bringbar sind, die erste Gruppe von Wendemagneten (7) um eine quer zur Zuförderrichtung (R) drehbewegliche Achse (7a) zwischen eine weitere Gruppe von Wendemagneten (25) einschwenkbar ist, die Teil von drehbeweglichen Doppelmagneten (25, 26) sind, deren einer oberer Wendemagnet (25) sich jeweils in der Aufnahmeposition und deren anderer unterer Wendemagnet (26) sich jeweils über dem Stapeltisch (30) in der Ablageposition befindet und nach Drehen der Doppelmagneten um jeweils 180° in zwei oder mehr getrennte Pakete (A, B) bildenden Gruppen die Profilstäbe (P) schichtweise nacheinander ablegbar sind.

5. Einrichtung nach Anspruch 4 zur Durchführung des Verfahrens nach Anspruch 3 zur Bildung von verschachtelten Profilstabpaketen, dadurch gekennzeichnet, daß die Hubeinrichtung wechselweise zum Abheben und Ablegen einer Profilstabschicht aus dem Bereich unterhalb der Zuförderebene in den Bereich der Wendemagneten (7) oder in die Aufnahmeposition der weiteren Wendemagneten (26) der Doppelmagneten (25, 26) bewegbar ist.

6. Einrichtung nach einem der Ansprüche 4 oder 5, dadurch gekennzeichnet, daß die Hubeinrichtung aus einem im Bereich der ersten Wendemagneten (7) und der weiteren Wendemagneten (25 bzw. 26) heb- und senkbaren und in horizontaler Ebene verfahrbaren Paar von Übergabewagen (11) gebildet wird.

7. Einrichtung zur Durchführung des Verfahrens nach einem der Ansprüche 1 oder 2, wobei wechselweise in der einen oder der anderen Richtung mit Ablagekämmen versehene Gruppen von Transportwagen, über die Breite der Ablagekämme nacheinander mit Profilstäben gleicher Länge beschickt werden und die jeweils mit einer Profilstabgruppe versehene Transportwagengruppe in den Bereich einer vor dem Stapeltisch angeordneten Gruppe von schwenkbaren Wendemagneten verfahrbar ist, die Gruppe von Wendemagneten die jeweilige Profilstabgruppe von den Ablagekämmen der in den Bereich der Wendemagneten verfahrenen Transportwagengruppe abhebt und unter Verschwenken der Wendemagneten um 180° schichtweise nacheinander auf den Stapeltisch ablegt, dadurch gekennzeichnet, daß die Ablagekämme (36a) der Transportwagen (36) in zwei oder mehr durch Lücken getrennte Abschnitte unterteilt sind und die in den getrennten Abschnitten gebildeten Profilstabgruppen (I, II bzw. Ia, IIa) auf dem Stapeltisch (42) zu zwei oder mehr getrennten Profilstabpaketen (A, B) schichtweise ablegbar sind.

8. Einrichtung nach Anspruch 7 zur Durchführung des Verfahrens nach Anspruch 3, dadurch gekennzeichnet, daß die Ablagekämme (36a) der beiden Gruppen von Transportwagen (36) abwechselnd zur Aufnahme von ungewendeten und gewendeten Profilstabgruppen in ihren getrennten Abschnitten je Propfilstabschicht ausgebildet sind.

9. Einrichtung nach einem der vorhergehenden Ansprüche, dadurch gekennzeichnet, daß die Ablagekämme (36a) mit den Transportwagen (36) lösbar verbunden sind.

**Claims**

1. Operating method for the forming of unnested or nested profile rod packets on a vertically displaceable stacking table (30) of profile rod machines, wherein the profile rods (P) forming a respective rod layer are conveyed over layer by layer one after the other onto the stacking table and deposited one onto the other, characterised thereby, that simultaneously during each conveying-over, a profile rod layer subdivided into two or more rod groups (I, II; Ia, IIa) is deposited on the stacking table with gaps between the rod groups and the rod groups of the successive profile rod layers are stacked into two or more small packets (A, B).

2. Operating method according to claim 1 for the forming of unnested profile rod packets, characterised thereby, that the profile rod (P) of the profile rod layer subdivided into two or more rod groups (I, II; Ia, IIa) are deposited one upon the other layer by layer in the same position.

3. Operating method according to claim 1 for the forming of nested profile rod packets, characterised thereby, that the profile rods (P) of the profile rod layer subdivided into two or more rod groups (I, II; Ia, IIa) are deposited one upon the other layer by layer alternately in unturned and turned position.

4. Equipment for the performance of the method according to one of the claims 1 or 2, wherein smaller profile rod layers of preselected rod number and total width are formed at resettable raisable and lowerable stopper pairs (4, 5) from profile rod groups (I, II; Ia, IIa) conveyed forward along an endless conveyor, are conveyed further to a stopper group in the region of the take-over place and conveyed by means of stroke equipments and turning magnets (7) over from the takeover place into the region of the stacking table (30), characterised thereby, that at least two smaller groups of profile rods (P) lying against separate stopper groups (4, 5) are positioned simultaneously underneath a first group of turning magnets (7) and are bringable into contact at their underside by means of raisable and lowerable as well as laterally movable transfer carriages (11), the first group fo turning magnets (7) is pivotable about an axle (7a) rotationally movable transversely to the conveying direction (R) into between a further group of turning magnets (25), which are part of rotationally movable double magnets (25, 26), the one upper turning magnet (25) of which is each time disposed in the receiving position and the other lower turning magnet (26) of which is each time disposed in the deposit position above the stacking table (30) and, after rotation of the double magnets through 180° each time, the profile rods (P) are depositable one after the other layer by layer in groups forming two or more separate packets (A, B).

5. Equipment according to claim 4 for the performance of the method according to claim 3 for the forming of nested profile rod packets, characterised thereby, that the stroke equipment is movable alternately for the raising off and depositing of a profile rod layer out of the region underneath the conveying plane into the region of the turning magnets (7) or into the receiving position of the further turning magnets (26) of the double magnets (25, 26).

6. Equipment according to one of the claims 4 or 5, characterised thereby, that the stroke equipment is formed of a pair of transfer carriages (11), which is raisable and lowerable and movable in horizontal plane in the region of the first turning magnets (7) and the further turning magnets (25 or 26).

7. Equipment for the performance of the method according to one of the claims 1 or 2, wherein groups of transport carriages, which are provided alternately in the one or the other direction with deposit combs, are charged with profile rods of equal length one after the other over the width of the deposit combs and the transport carriage group respectively provided with a profile rod group is movable into region of a group of pivotable turning magnets arranged in front of the stacking table, the group of turning magnets raises the respective profile rod group off from the deposit combs of the transport carriage group moved into the region of the turning magnets and, with pivotation of the turning magnets through 180°, deposits it on the stacking table one after the other layer by layer, characterised thereby, that the deposit combs (36a) of the transport carriages (36) are subdivided into two or more sections separated by gaps and the profile rod groups (I, II or Ia, IIa) formed in the separate sections are depositable on the stacking table (42) into two or more separate profile rod packets (A, B).

8. Equipment according to claim 7 for the performance of the method according to claim 3, characterised thereby, that the deposit combs (36a) of both the groups of transport carriages (36) are constructed alternately for the reception of unturned and turned profile rod groups in their separate sections for each profile rod layer.

9. Equipment according to one of the preceding claims, characaterised thereby, that the deposit combs (36a) are detachably connected with the transport cariages (36).

## Revendications

1. Procédé de réalisation de paquets de barres profilés emballés ou non, sur une table d'empilage (30) pour machines à barres profilées réglable en hauteur, les barres profilées (P) qui constituent les différentes couches de barres étant transportées couche par couche sur la table d'empilage et déposées les unes sur les autres, caractérisé en ce qu'au cours de chaque opération de transport une couche de barres profilées subdivisée en deux ou plus de deux groupes de barres (I, II) et comportant des lacunes entre ces groupes de barres est déposée sur la table d'empilage et en ce que les groupes de barres des couches de barres profilées successives sont empilés de manière à former deux ou plus de deux petits paquets (A, B).

2. Procédé selon la revendication 1 pour la réalisation de paquets de barres profilées non emballés, caractérisé en ce que les barres profilées (P) de la couche de barres profilées subdivisée en deux ou plus de deux groupes de barres (I, II; Ia, IIa) sont déposées dans la même position couche par couche les unes sur les autres.

3. Procédé selon la revendication 1 pour la réalisation de paquets de barres profilées emballés caractérisé en ce que les barres profilées (P) de la couche de barres profilées subdivisée en deux ou plus de deux groupes de barres (I, II; Ia, IIa) sont déposées alternativement dans une position et dans la position inverse couche par couche les unes sur les autres.

4. Dispositif pour l'application du procédé selon l'une des revendications 1 ou 2, dans lequel, à partir de groupes de barres profilées (I, II; Ia, IIa) amenés à proximité du dispositif, des couches de barres profilées contenant un nombre déterminé de barres et ayant une largeur totale déterminée sont formées le long d'un transporteur sans fin au niveau de couples de dispositifs d'arrêt (4, 5), qui peuvent se lever et s'abaisser en étant réglables, et transportées ensuite jusqu'à un groupe de dispositifs d'arrêt du poste de réception, puis, au moyen de dispositifs de levage et d'aimants de manipulation (7), transportées au-delà du poste de réception jusqu'à la zone de la table d'empilage (30), caractérisé en ce qu'au moins deux petits groupes de barres profilées (P) situés près des groupes de dispositifs d'arrêt (4, 5) séparés sont positionnés simultanément sous un premier groupe d'aimants de manipulation (7) et peuvent être amenés au contact par le côté inférieur, au moyen de chariots de transport (11) qui peuvent se lever et s'abaisser et se déplacer latéralement, en ce que le premier goupe d'aimants de manipulation (7) peut pivoter, autour d'un axe (7a) qui peut tourner transversalement par rapport à la direction de transport (R), entre un autre groupe d'aimants de manipulation (25) qui sont une partie d'aimants doubles (25, 26) pivotants, l'aimant de manipulation (25) supérieur se trouvant dans la position de réception et l'aimant de manipulation inférieur (26) se trouvant, au-dessus de la table d'empilage (30), dans la position de déchargement, et en ce qu'après la rotation des aimants doubles, de 180°, dans des groupes formant deux ou plus de deux paquets (A, B) séparés, les barres profilées (P) peuvent être déposées couche les unes après les autres.

5. Dispositif selon la revendication 4 pour l'application du procédé selon la revendication 3 pour la formation de paquets de barres profilées emballés, caractérisé en ce que le dispositif de levage peut se déplacer alternativement pour le levage et le déchargement d'une couche de barres profilées pour les déplacer depuis la zone située au-dessous du plan d'amenée jusqu'à la zone des aimants de manipulation (7) ou juqu'à la position de réception des autres aimants de manipulation (26) des aimants doubles (25, 16).

6. Dispositif selon l'une des revendications 4 ou 5, caractérisé en ce que le dispositif de levage est constitué par un couple de chariots de transport (11) qui, dans la zone des premiers aimants de manipulation (7) et des autres aimants de manipulation (25, 26), peuvent s'élever et s'abaisser et se déplacer dans un plan horizontal.

7. Dispositif pour l'application du procédé selon l'une des revendications 1 ou 2, dans lequel des groupes de chariots de transport munis d'arêtes de chargement alternativement dans l'une et l'autre direction sont chargés, sur toute la largeur de ces arêtes de dechargement, avec des barres profilées de même longueur et en ce que chaque groupe de chariots de transport muni d'un groupe de barres profilées peut se déplacer pour aller dans la zone du groupe d'aimants de manipulation pivotants disposés devant la table d'empilage, en ce que le groupe d'aimants de manipulation enlève le groupe correspondant de barres profilées des arêtes de déchargement du groupe de chariots de transport qui sont arrivés dans la zone des aimants de manipulation et, tandis que les aimants de manipulation pivotent de 180°, les décharge couche par couche les uns après les autres sur la table d'empilage, caractérisé en ce que les arêtes de déchargement (36a) des chariots de transport (36) sont subdivisés en deux ou plus de deux secteurs séparés par des lacunes et en ce que les groupes de barres profilées (I, II ou Ia, IIa) formés dans les secteurs séparés sur la table d'empilage peuvent être déposés couche par couche de manière à former deux ou plus de deux paquets de barres profilées séparés (A, B).

8. Dispositif selon la revendication 7 pour l'application du procédé selon la revendication 3, caractérisé en ce que les arêtes de déchargement (31a) des deux groupes de chariots de transport (36) sont disposées alternativement pour la réception de groupes de barres profilées dans une position et dans l'autre dans leurs secteurs séparés par couche de barres profilées.

9. Dispositif selon l'une des revendications 1 à 8, caractérisé en ce que les arêtes de déchargement (36a) sont reliées d'une manière amovible aux chariots de transport (36).

FIG.1

FIG.2